# EUROPEAN PATENT APPLICATION

(11) **EP 4 783 259 A1**
(43) Date of publication of application: **29.07.2026**
(21) Application number: 25765939.1
(22) Date of filing: 17.06.2025
(51) Int. Cl.: H01M 4/36, H01M 4/58, H01M 4/525, H01M 4/505, H01M 4/131, H01M 10/0525

(54) **POSITIVE ELECTRODE ACTIVE MATERIAL AND PREPARATION METHOD THEREFOR, POSITIVE ELECTRODE SHEET, AND BATTERY**

(30) Priority: 10.12.2024 CN 202411817186
(71) Applicant: Eve Power Co., Ltd., Jingmen, Hubei 448000 (CN)
(72) Inventor: WU, Tingting, Jingmen, Hubei 448000 (CN); LIU, Fanfen, Jingmen, Hubei 448000 (CN); CHEN, Meng, Jingmen, Hubei 448000 (CN); WEN, Shengyao, Jingmen, Hubei 448000 (CN); GAO, Jianhang, Jingmen, Hubei 448000 (CN)
(74) Representative: Stöckeler, Ferdinand
(86) International application number: PCT/CN2025/101560
(87) International publication number: WO 2026/123631

(57) **Abstract**

The present application provides a positive electrode active material, a method for preparing the same, a positive electrode plate, and a battery, which relate to the field of battery technologies. The positive electrode active material includes a ternary material and lithium manganese iron phosphate. A mass of the lithium manganese iron phosphate is represented by A, a total mass of the ternary material and the lithium manganese iron phosphate is represented by B, where A and B satisfy: 0 < A/B < 50%. The lithium manganese iron phosphate has a hollow spherical structure and has a median particle size ranging from 0.5 µm to 3 µm.

## Description

This application claims priority to and the benefit of Chinese Patent Application No. 202411817186.X, filed on December 10, 2024, the disclosure of which is incorporated herein by reference in its entirety.

### TECHNICAL FIELD

The present application relates to the field of battery technologies, and in particular, to a positive electrode active material, a method for preparing the same, a positive electrode slurry, a positive electrode plate, and a battery.

### BACKGROUND

The cost of ternary materials remains high due to the scarcity of upstream metallic raw materials, cobalt and nickel, in the new energy industry chain (cobalt and nickel account for 0.43% and 0.01% of the country's non-ferrous metal minerals, respectively). Compared with the precious metals (cobalt and nickel) in the ternary materials, the main metallic elements in lithium manganese iron phosphate are manganese and iron, which have relatively low market prices, ensuring relatively low cost. In addition, from a structural perspective, compared with ternary materials with a layered structure, the lithium manganese iron phosphate having an olivine structure can maintain relatively high stability during the charging and discharging processes. Even when all lithium ions are extracted during the charging process, no structural collapse will occur. Meanwhile, in lithium manganese iron phosphate, phosphorus (P) atoms form PO4 tetrahedrons through strong P-O covalent bonds, making it difficult for oxygen atoms to extract from the structure. This characteristic also endows lithium manganese iron phosphate with high safety and stability. Currently, most ternary materials available on the market have a cycle life of approximately 1,000 cycles to 2,000 cycles, with a relatively short cycle life. In contrast, lithium manganese iron phosphate, with its stable olivine structure, can achieve a cycle life of over 2,000 cycles, demonstrating excellent cycling performance. In addition, conventional ternary materials typically have a particle size of 6 microns to 10 microns. Due to their large particle size, the diffusion path of lithium ions is long, resulting in relatively poor high-rate performance. However, the ternary materials have relatively high gram capacity performance, i.e., relatively high energy density.

Considering the respective advantages and disadvantages of ternary materials and lithium manganese iron phosphate, ternary materials and lithium manganese iron phosphate are usually blended to reduce costs.

### SUMMARY

In related art, single-crystalline ternary materials are typically blended with single-crystalline lithium manganese iron phosphate. While this approach can reduce costs, it is challenging to balance electrochemical performance such as rate performance and cycling performance.

The present application provides a positive electrode active material including a ternary material and lithium manganese iron phosphate;
where a mass of the lithium manganese iron phosphate is represented by A, and a total mass of the ternary material and the lithium manganese iron phosphate is represented by B, where A and B satisfy: 0 < A/B < 50%; and
the lithium manganese iron phosphate has a hollow spherical structure and has a median particle size ranging from 0.5 µm to 3 µm.

The present application further provides a method for preparing a positive electrode active material, which is used for preparing the positive electrode active material as described above, including the following steps:
providing a ternary material and lithium manganese iron phosphate; and
mixing the ternary material and the lithium manganese iron phosphate in a certain ratio to obtain a positive electrode active material.

The present application further provides a positive electrode plate, which includes a positive electrode foil and a positive electrode active layer coated on the positive electrode foil;
where the positive electrode active layer includes the positive electrode active material as described above;
and/or, a positive electrode active material prepared by the method for preparing the positive electrode active material as described above.

The present application further provides a battery that includes the positive electrode plate as described above.

### BENEFICIAL EFFECTS

A positive electrode active material provided by the embodiments of the present application includes a ternary material and lithium manganese iron phosphate. A mass of the lithium manganese iron phosphate is represented by A, and a total mass of the ternary material and the lithium manganese iron phosphate is represented by B, where A and B satisfy: 0 < A/B < 50%. The lithium manganese iron phosphate has a hollow spherical structure and has a median particle size ranging from 0.5 µm to 3 µm. By adding lithium manganese iron phosphate to the positive electrode active material, the amount of the ternary material can be reduced, thereby reducing the cost of the positive electrode active material. Lithium manganese iron phosphate has a hollow spherical structure with a median particle size in a range of 0.5 µm to 3 µm, thus exhibiting excellent rate performance. By ensuring that the mass A of lithium manganese iron phosphate and the total mass B of the ternary material and the lithium manganese iron phosphate satisfy the condition: 0 < A/B < 50%, the cost of the positive electrode active material can be reduced while balancing high rate performance, cycling performance, and energy density, thereby improving overall electrochemical performance.

In the method for preparing the positive electrode active material provided by the embodiments of the present application, the ternary material and lithium manganese iron phosphate are blended to form the positive electrode active material, and the preparation process is simple.

The positive electrode plate provided in the embodiments of the present application, by including the aforementioned positive electrode active material, can balance high rate performance, cycling performance, and energy density, thereby improving overall electrochemical performance.

The battery provided in the embodiments of the present application, by including the aforementioned positive electrode plate, can balance high rate performance, cycling performance, and energy density, thereby enhancing overall electrochemical performance.

### BRIEF DESCRIPTION OF THE DRAWINGS

FIG. 1 is a schematic diagram of a synthesis process of hollow spherical lithium manganese iron phosphate according to some embodiments of the present application.
FIG. 2 is an analysis diagram of a test result of 3C capacity retention rate in Comparative Example 1.
FIG. 3 is an analysis diagram of a test result of 3C capacity retention rate in Comparative Example 2.
FIG. 4 is an analysis diagram of a test result of 3C capacity retention rate in Example 1 of the present application.
FIG. 5 is an analysis diagram of a test result of cycling performance in Example 1 of the present application.

### DETAILED DESCRIPTION

In a first aspect, some embodiments of the present application provide a positive electrode active material that includes a ternary material and lithium manganese iron phosphate. A mass of the lithium manganese iron phosphate is represented by A, and a total mass of the ternary material and the lithium manganese iron phosphate is represented by B, where A and B satisfy: 0 < A/B < 50%. The lithium manganese iron phosphate has a hollow spherical structure and has a median particle size ranging from 0.5 µm to 3 µm. By adding lithium manganese iron phosphate to the positive electrode active material, the amount of the ternary material can be reduced, thereby reducing the cost of the positive electrode active material. Lithium manganese iron phosphate has a hollow spherical structure and has a median particle size in the range of 0.5 µm to 3 µm, thus exhibiting excellent rate performance. By ensuring that the mass A of lithium manganese iron phosphate and the total mass B of the ternary material and the lithium manganese iron phosphate satisfy the condition: 0 < A/B < 50%, the cost of the positive electrode active material can be reduced while balancing high rate performance, cycling performance, and energy density, thereby improving overall electrochemical performance.

Hollow spherical lithium manganese iron phosphate can provide extensive and unobstructed diffusion channels. Moreover, compared with lithium manganese iron phosphate with a solid structure, the hollow spherical lithium manganese iron phosphate can reduce the diffusion distance of lithium ions within the material, thereby increasing the diffusion rate of lithium ions. When the hollow spherical lithium manganese iron phosphate is applied in batteries, it can withstand the volume changes of the batteries during the charging and discharging processes, thus facilitating maintaining the cycle stability of the material. Due to the increased diffusion rate of lithium ions, the hollow spherical lithium manganese iron phosphate can quickly respond to current changes during the charging and discharging processes, thus exhibiting better rate performance.

The lithium manganese iron phosphate provided in the embodiments of the present application not only has a hollow spherical structure but also features a small particle size, with a median particle size of 0.5 µm to 3 µm. This shortens the diffusion distance of lithium ions within the material; when applied in batteries, it enables the batteries to quickly respond to current changes, thus improving rate performance of the batteries. The relatively small particle size also helps reduce agglomeration of the positive electrode active material, thus improving its dispersibility and stability.

By compositing lithium manganese iron phosphate that meets the above conditions with the ternary material to form the positive electrode active material, the embodiments of the present application can reduce costs while balancing high rate performance, cycling performance, and energy density, thereby enhancing the overall electrochemical performance of the positive electrode active material when applied in batteries.

In some embodiments, the lithium manganese iron phosphate has a specific surface area ranging from 11 m²/g to 21m²/g.

By setting the specific surface area of lithium manganese iron phosphate within the above range, it is beneficial to enhancing the intercalation and deintercalation reactions of lithium ions, thereby improving the energy density of the material and the battery range. Additionally, this can shorten the diffusion path of lithium ions within the material and increase the diffusion rate of lithium ions, thereby further improving the rate performance. When the specific surface area is within this range, it can also reduce agglomeration, improve dispersibility and stability, and thereby extend the cycle life of the battery.

In some embodiments, the lithium manganese iron phosphate has a tap density ranging from 0.3 g/cm³ to 0.8 g/cm³.

In some embodiments, a molecular formula of the ternary material is represented by LiNiₐCo_{b}Mn_{c}M_{d}O₂, where a + b + c + d = 1, a ≥ 0.5, b ≤ 0.3, and 0 ≤ d ≤ 0.05. M is selected from a group consisting of Zr, Sr, W, B, Nb, Al, Mg, and Ti.

The relatively high content of nickel (Ni) in the ternary material facilitates increasing the gram capacity and energy density while reducing the cost per watt-hour. Therefore, a is set to satisfy: a ≥ 0.5. Cobalt (Co) is a relatively expensive element. By reasonably controlling the content of cobalt, costs can be reduced while maintaining high performance.

The electrochemical performance of the ternary material can be improved by doping elements such as Zr, Sr, W, B, Nb, Al, Mg, Ti, or the like. Specifically, doping with zirconium (Zr) facilitates improving the stability and mechanical strength of the ternary material, effectively resisting damage caused by volume expansion and contraction of the material; doping with strontium (Sr) can increase the primary particle size and unit cell volume of the ternary material, thereby improving compaction density of the ternary material, which is beneficial to enhancing the volumetric energy density of batteries; doping with tungsten (W) and boron (B) facilitates optimizing the crystal structure of the ternary material, so as to improve stability and performance of the ternary material; doping with niobium (Nb) can enhance the cycling performance and thermal stability of a nickel-rich ternary material; doping with aluminum (Al) facilitates improving the battery capacity and cycle stability of the ternary material-aluminum has high electrochemical activity and can provide more lithium intercalation sites, thereby increasing the energy storage capacity of batteries; and doping with magnesium (Mg) and titanium (Ti) facilitates improving the structural stability and thermal stability of the ternary material, which is conducive to enhancing the safety performance and cycle life of batteries.

By setting d ≤ 0.05, the doping elements do not significantly change the main structure of the ternary material, and thus the original stability and reliability of the ternary material are maintained. Moreover, the amount of the added doping elements is relatively small, which allows for achieving the desired effect while reducing costs.

In some embodiments, the ternary material has a median particle size ranging from 3 µm to 10 µm. By setting the median particle size of the ternary material within the above range, the diffusion path of lithium ions within the ternary material particles is relatively short, which facilitates improving the diffusion efficiency of lithium ions, thereby enhancing the charging and discharging performance of the battery. The similar particle sizes of the ternary material and lithium manganese iron phosphate facilitate uniform stress distribution within the positive electrode active material, thereby reducing capacity attenuation caused by volume changes.

In some embodiments, the lithium manganese iron phosphate includes a lithium manganese iron phosphate body and a carbon coating layer covering the lithium manganese iron phosphate body.

By providing the carbon coating layer, the electronic conductivity of the lithium manganese iron phosphate body can be enhanced, the internal resistance of the battery can be reduced, and thus the power density and energy density of the battery can be improved. The carbon coating layer also facilitates forming a conductive network on the surface of the lithium manganese iron phosphate body, thereby improving the electron transport efficiency and reducing the polarization phenomenon during the charging and discharging processes of the battery. In addition, the carbon coating layer may also serve as a protective layer for the lithium manganese iron phosphate body, reducing the corrosive effect of substances such as hydrofluoric acid in the electrolyte solution. Moreover, the carbon coating layer can enhance the structural stability of the lithium manganese iron phosphate body and improve the cycling performance.

In a second aspect, some embodiments of the present application provide a method for preparing a positive electrode active material, which is used for preparing the positive electrode active material as described above, and the method includes the following steps:
providing a ternary material and lithium manganese iron phosphate; and
mixing the ternary material and the lithium manganese iron phosphate in a certain ratio to obtain a positive electrode active material.

In the embodiments of the present application, the ternary material and lithium manganese iron phosphate are blended to form the positive electrode active material, and the preparation process is simple. The beneficial effects brought by the prepared positive electrode active material have been described above, and will not be repeated here.

In some embodiments, before providing the ternary material and lithium manganese iron phosphate, the method further includes a step of preparing the lithium manganese iron phosphate.

Preparing the lithium manganese iron phosphate includes the following steps:
adding a phosphoric acid solution to a lithium source solution for a reaction to obtain a hollow spherical lithium phosphate precursor;
dispersing a ferrous salt, a manganese salt, and a lithium phosphate precursor in a solvent to form a lithium manganese iron phosphate precursor after a reaction; and
performing a first sintering on the lithium manganese iron phosphate precursor to obtain lithium manganese iron phosphate.

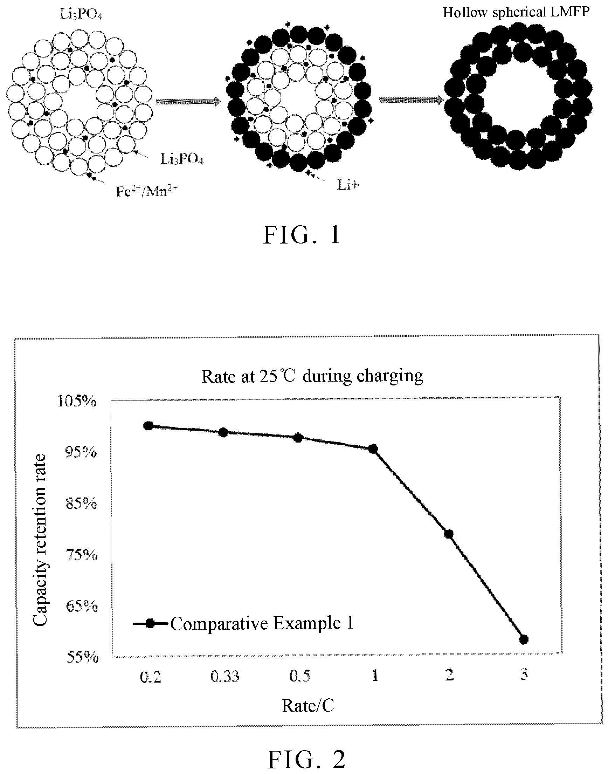

That is, the embodiments of the present application prepare the hollow spherical lithium manganese iron phosphate by a liquid-phase method. As shown in FIG. 1, the hollow spherical lithium phosphate precursor is first formed through the reaction of phosphoric acid and a lithium source. Subsequently, a ferrous salt, a manganese salt, and the lithium phosphate precursor are dispersed in a solvent. Through a solvothermal method, ferrous ions and manganese ions are bonded on the lithium phosphate precursor with the hollow spherical structure. The gaps between different monomers in the lithium phosphate precursor facilitate the entry of ferrous ions and manganese ions into the interior of the hollow spherical structure, thereby forming a lithium manganese iron phosphate precursor. After the lithium manganese iron phosphate precursor is sintered, the crystallinity is improved, the binding force between particles is enhanced, and the microstructure is optimized, leading to the formation of stable lithium manganese iron phosphate.

Exemplarily, the ferrous salt, the manganese salt, and the lithium phosphate precursor are dispersed in an ethylene glycol solvent. Since lithium phosphate is insoluble in ethylene glycol, it can maintain its hollow spherical structure during the reaction. Moreover, given that both lithium phosphate and lithium manganese iron phosphate share the same orthorhombic system, the hollow spherical lithium manganese iron phosphate is formed through structural transformation during the reaction.

The method for preparing lithium manganese iron phosphate provided in the embodiments of the present application can prepare lithium manganese iron phosphate with a hollow spherical structure and a relatively small particle size, exhibiting excellent rate performance.

In some embodiments, adding the phosphoric acid solution to the lithium source solution for a reaction to obtain the hollow spherical lithium phosphate precursor includes the following steps:
adding the phosphoric acid solution to a lithium hydroxide solution, obtaining a first filtrate through stirring at room temperature for 2 hours to 4 hours, and filtering; and
drying the first filtrate to obtain the hollow spherical lithium phosphate precursor.

The reaction between phosphoric acid in the phosphoric acid solution and lithium hydroxide in the lithium hydroxide solution forms lithium phosphate. Through self-assembly in the solution, the lithium phosphate further forms the hollow spherical lithium manganese iron phosphate. In the process of preparing the hollow spherical lithium phosphate, the reaction conditions are mild and the process is simple.

A ratio of the amount of substance of phosphoric acid to the amount of substance of lithium hydroxide may be set to 1: 3 to facilitate the formation of lithium phosphate (Li₃PO₄), thus improving the utilization rate of phosphoric acid and lithium hydroxide.

In some embodiments, a ratio of the amount of substance of phosphoric acid to the amount of substance of lithium hydroxide ranges from 1: 9 to 9: 1. The molar ratio of the ferrous salt and the manganese salt can be adjusted as needed. It can be understood that different lithium manganese iron phosphate can be obtained by setting this ratio of the two, so that a ratio of the iron (Fe) element to the manganese (Mn) element in the lithium manganese iron phosphate is changed.

That is, the molecular formula of the obtained lithium manganese iron phosphate is represented by LiMnₓFe_{y}PO₄, where 0 < x < 1, 0 < y < 1, 0 < x + y ≤ 1.

In some embodiments, a ratio of a sum of the amount of substance of the ferrous salt and the amount of substance of the manganese salt to the amount of substance of the lithium phosphate precursor is 1: 1. By setting the above ratio relationship, the utilization rate of the ferrous salt, the utilization rate of the manganese salt, and the utilization rate of the lithium phosphate precursor can be improved.

In some embodiments, performing the first sintering on the lithium manganese iron phosphate precursor includes the following step:
sintering the lithium manganese iron phosphate precursor under a protective atmosphere at a temperature of 150°C to 200°C for 5 hours to 8 hours.

Sintering under a protective atmosphere prevents the lithium phosphate precursor from undergoing oxidation reactions with oxygen during the sintering process, thereby enhancing sintering stability. By controlling the sintering temperature within the range of 150°C to 200°C, reactions such as dehydration and recrystallization of the lithium manganese iron phosphate precursor may occur. Sintering for 5 hours to 8 hours ensures sufficient reaction completion, leading to the formation of lithium manganese iron phosphate with a stable structure.

In some embodiments, after sintering the lithium manganese iron phosphate precursor, the method further includes the following steps:
mixing the sintered lithium manganese iron phosphate precursor with a carbon source and a first additive to obtain a coating material; and
performing a second sintering on the coating material to obtain the lithium manganese iron phosphate including a carbon coating layer.

By mixing the carbon source and the first additive with the sintered lithium manganese iron phosphate precursor and performing a second sintering step, the carbon coating layer can be formed on the surface of lithium manganese iron phosphate.

In some embodiments, a mass proportion of the carbon source in the coating material ranges from 10% to 20%. By controlling the mass proportion of the carbon source in the coating material within the above range, the carbon coating layer with an appropriate thickness can be facilitated.

In some embodiments, the carbon source includes at least one of glucose, sucrose, and polyethylene glycol.

In some embodiments, the first additive includes at least one of Mg, Ti, Nb, Nd, Zr, and Al, with an addition proportion ranging from 0 ppm to 6000 ppm.

The addition of the first additive, which includes at least one of Mg, Ti, Nb, Nd, Zr, and Al, can improve the conductivity of the carbon coating layer, optimize diffusion performance of ions, enhance structural stability, and increase energy density.

By setting the addition proportion of the first additive within the range of 0 ppm to 6000 ppm, the effectiveness of the first additive can be exerted, while phenomenon such as blockage of lithium ion diffusion channels caused by excessive addition of the first additive is reduced, thereby ensuring the structural stability and electrochemical performance of the material.

In some embodiments, performing the second sintering on the coating material includes the following step:
sintering the coating material at a temperature of 550°C to 750°C for 5 hours to 8 hours.

By performing the second sintering at a temperature ranging from 500°C to 750°C, the carbon source can undergo a carbonization reaction to form a compact carbon coating layer, which adheres tightly to the surface of lithium manganese iron phosphate. This enhances the conductivity and structural stability of the carbon coating layer. Setting the sintering time ranging from 5 hours to 8 hours facilitates strong bonding between the carbon coating layer and lithium manganese iron phosphate, while preventing degradation of performance caused by excessively long sintering durations.

In some embodiments, before providing the ternary material and the lithium manganese iron phosphate, the method further includes the following step:
preparing the ternary material.

Preparing the ternary material includes the following steps:
mixing a ternary material precursor, lithium carbonate, and a second additive to obtain a first mixture;
performing a third sintering on the first mixture under an oxygen-containing atmosphere to obtain a first sintered material; and
crushing the first sintered material to obtain the ternary material.

Herein, the proportions of the ternary material precursor, lithium carbonate, and the second additive can be adjusted as needed. The ternary material precursor mainly includes three elements: nickel, cobalt, and manganese, which are the core components of the ternary material. As a lithium source, lithium carbonate can react with the ternary material precursor during the sintering process to form lithium nickel cobalt manganese oxide. The addition of the second additive can enhance the conductivity, structural stability, and cycling performance of the ternary material.

In some embodiments, the second additive includes at least one of Zr, Sr, W, B, Nb, Al, Mg, and Ti.

In some embodiments, performing the third sintering on the first mixture under an oxygen-containing atmosphere includes the following step:
placing the first mixture in a sintering furnace for sintering under an atmosphere having an oxygen concentration of ≥ 95%.

During the above sintering process, the sintering furnace is first heated from room temperature to a temperature of 450°C to 600°C at a heating rate of 5 °C/min, held for 3 hours to 5 hours, and then heated to a temperature of 700°C to 900°C at a heating rate of 5°C/min, followed by holding for 6 hours to 10 hours.

Under an oxygen-rich atmosphere (with an oxygen concentration of ≥95%), a stable oxidizing environment is facilitated, which helps the ternary material form an ideal crystal structure and a layered structure during the sintering process, thereby enhancing the electrochemical performance of the ternary material. During the sintering process, the sintering furnace is first heated from room temperature to a temperature of 450°C to 600°C at a heating rate of 5°C/min, and held for 3 hours to 5 hours. The relatively slow heating rate allows the material to gradually adapt to temperature changes during the heating process, while holding at the temperature of 450°C to 600°C for 3 hours to 5 hours enables the decomposition of the ternary material precursor, the melting of lithium carbonate, and other reactions. Subsequently, the temperature is raised again, and the temperature is maintained in a range of 700°C to 900°C for 6 hours to 10 hours. The prolonged holding at high temperature facilitates diffusion and reactions of ions within the material, promoting the refinement and densification of the crystal structure. Meanwhile, high-temperature holding can also improve the crystallinity and purity of the ternary material, thereby enhancing the electrochemical performance of the ternary material.

In a third aspect, some embodiments of the present application provide a positive electrode plate, which includes a positive electrode foil and a positive electrode active layer coated on the positive electrode foil;
where the positive electrode active layer includes the positive electrode active material as described above;
and/or, a positive electrode active material prepared by the method for preparing the positive electrode active material as described above.

The positive electrode plate provided in the embodiments of the present application also has the beneficial effects of the positive electrode active material described above, and will not be repeated here.

In some embodiments, the positive electrode plate includes a positive electrode foil, a positive electrode active material, a positive electrode conductive agent, a positive electrode binder, and a dispersant.

The positive electrode foil may be a carbon-coated aluminum foil. In the carbon-coated aluminum foil, an aluminum foil may have a thickness ranging from 6µm to 20µm, and a carbon-coated layer may have a thickness greater than 0 µm and less than or equal to 1.5 µm.

The carbon-coated aluminum foil includes the aluminum foil and the carbon-coated layer coated on the aluminum foil. The carbon-coated layer can optimize the surface performance of the aluminum foil, enabling the positive electrode slurry to adhere tightly and uniformly to the aluminum foil, reducing ineffective space, and thereby improving the energy density of the battery. Setting the thickness of the aluminum foil between 6 µm and 20 µm ensures sufficient mechanical strength while reducing the weight of the battery, thus improving the energy density of the battery. Configuring the thickness of the carbon-coated layer within the range of greater than 0 µm and less than or equal to 1.5 µm results in an ultra-thin and uniform layer, which contributes to enhancing the overall performance of the battery.

A mass ratio of the positive electrode active material, the positive electrode conductive agent, the positive electrode binder, and the positive electrode dispersant is (95~98): (0.5~2.5): (1~3): (0~1). The positive electrode active material is a key component for storing and releasing energy in the battery. Setting a relatively high proportion of the positive electrode active material facilitates improving the energy density of the battery. Under the same volume or mass, the electrical energy storage capacity of the battery can be increased, thereby extending the service life of the battery. An appropriate amount of the positive electrode conductive agent facilitates forming an effective conductive network, reduces the internal resistance of the battery, and improves the transmission rate of electrons and ions, thereby enhancing the charging and discharging performance of the battery. The positive electrode binder plays a key role in maintaining the structural integrity and stability of the positive electrode plate. By controlling the addition proportion of the positive electrode binder within a suitable range, it can be ensured that the positive electrode active material does not fall off under the action of expansion and contraction during charging and discharging processes, and the stability of the structure can be maintained, thereby improving the cycle life and safety of the battery. The dispersant helps to improve the fluidity of the positive electrode slurry, ensuring that the positive electrode active material can be uniformly distributed.

In some embodiments, the positive electrode conductive agent includes at least one of carbon nanotubes, graphene, and acetylene black. Carbon nanotubes exhibit high electrical conductivity. Using them as a positive electrode conductive agent helps reduce the internal resistance of the battery and improves the charging and discharging efficiency of the battery. Moreover, carbon nanotubes possess excellent mechanical strength and flexibility, enabling them to withstand the volume changes of the positive electrode active material during the charging and discharging processes of the battery. This reduces the risk of particle fracture and structural damage to the positive electrode active material, thereby enhancing the cycling stability of the battery. When carbon nanotubes are used as the positive electrode conductive agent, the amount of added carbon nanotubes can be reduced, which facilitates an increase in the proportion of the positive electrode active material, thus further improving the energy density of the battery. Graphene has a large specific surface area, which helps form electrolyte solution storage voids and increases the contact area between the positive electrode active material and the electrolyte solution, thereby enhancing the charging and discharging efficiency of the battery. Moreover, graphene exhibits excellent mechanical properties, which can improve the volumetric energy density of the positive electrode plate, and enhance bendability and peel strength of the positive electrode plate, thus improving the overall stability of the battery. In addition, graphene also has good thermal conductivity, which can reduce the thermal impedance of the battery and improve the thermal stability of the battery. Acetylene black has moderate thermal conductivity and low nitrogen cost. Moreover, it exhibits good mechanical stability, which can inhibit detachment and damage of the material.

In some embodiments, the positive electrode binder includes at least one of polyvinylidene fluoride, polytetrafluoroethylene, and polyacrylic acid. Polyvinylidene fluoride (PVDF) has excellent chemical stability and corrosion resistance, which ensures reliability and safety during use. PVDF also has good high-voltage resistance, enabling it to remain stable under relatively high voltage conditions without being oxidized or degraded. It exhibits excellent solubility and dissolution rate, allowing it to disperse uniformly in the positive electrode slurry and on the surface of the positive electrode plate, thereby forming a uniform bonding layer. Additionally, its high flexibility and bonding strength can reduce the detachment of the positive electrode active material during repeated expansion and contraction processes. Polytetrafluoroethylene (PTFE) has excellent corrosion resistance, strong stability, and good high-temperature stability, allowing it to be used for extended periods at high temperatures without decomposition. Polyacrylic acid (PAA) has excellent adhesion and can connect with some functional groups on the surface of the positive electrode active material through hydrogen bonds, thereby forming a stable bonding layer, which helps prevent detachment and pulverization of the positive electrode active material. PAA can effectively inhibit the volume expansion of the positive electrode active material during charging and discharging processes, thus extending the cycle life of the battery. Moreover, PAA itself has a low volume expansion coefficient and a high thermal diffusion coefficient. Using it as a positive electrode binder ensures that the battery exhibits good safety during high-power charge-discharge and high-temperature operation.

In a fourth aspect, some embodiments of the present application provide a battery, which includes the positive electrode plate as described above.

The battery provided by the embodiments of the present application has the beneficial effects of the positive electrode active material described above, and will not be repeated here.

In some embodiments, the battery further includes a negative electrode plate, an electrolyte solution, and a separator.

The negative electrode plate includes a negative electrode foil, a negative electrode active material, a negative electrode conductive agent, and a negative electrode binder. The negative electrode foil is a copper foil or a copper mesh with a thickness of 4 µm to 12 µm. Both the copper foil and the copper mesh have excellent electrical conductivity and low resistivity, enabling them to conduct current in the battery quickly. When used as the negative electrode foil, they can provide an efficient conductive channel for the intercalation and deintercalation processes of lithium ions, thereby improving the charging and discharging efficiency and response speed of the battery. Both the copper foil and the copper mesh have high mechanical strength, which allows them to protect the internal structure of the battery, thereby enhancing the stability and strength of the internal structure of the battery. By controlling the thickness of the negative electrode foil within the range of 4 µm to 12 µm, sufficient structural strength can be ensured, while the energy density of the battery can be improved by reducing the mass of the negative electrode foil.

The negative electrode conductive agent is selected from the group consisting of carbon nanotubes, carbon black, and acetylene black. The advantages of carbon nanotubes and acetylene black have been described in the context of the positive electrode conductive agent, and their application as the negative electrode conductive agent offers similar benefits, which will not be repeated here. Carbon black has good electrical conductivity, which can enhance the conductivity of the negative electrode plate and reduce the internal resistance of the battery. Moreover, carbon black can disperse uniformly in the negative electrode active material to form a conductive network, accelerating electron transport rate and improving performance of the battery. By using carbon black as the negative electrode conductive agent, conductivity can be significantly improved with a relatively low dosage, which helps increase the amount of negative electrode active material added in the negative electrode plate. Moreover, carbon black also exhibits excellent chemical and physical stability, low cost, and good compatibility with other materials.

The electrolyte solution includes an electrolyte, an organic solvent, and an additive. The electrolyte is selected from the group consisting of lithium hexafluorophosphate (LIPF₆), lithium bis(fluorosulfonyl)imide (LiFSI), and lithium bis(trifluoromethanesulfonyl)imide (LiTFSI). The organic solvent includes at least one of ethylene carbonate (EC), dimethyl carbonate (DMC), diethyl carbonate (DEC), polycarbonate (PC), and ethyl methyl carbonate (EMC). The additive includes at least one of vinylene carbonate (VC), ethylene sulfate (DTD), methylene methanedisulfonate (MMDS), lithium dioxalate borate (LiBOB), and 1,3-propane sultone (PS). The additive accounts for 0.2% to 1.5% of the total mass of the electrolyte solution.

The separator includes a base film and a separator coating layer coated on the base film. A material of the base film is polypropylene (PP) or polyethylene (PE). A material of the separator coating layer includes at least one of aluminum oxide, boehmite, magnesium hydroxide, and barium sulfate. The base film has a thickness of 5 µm to 16 µm, the separator coating layer has a thickness of 0.5 µm to 5 µm, and the separator has a tensile strength greater than 200 MPa.

The vehicle provided by the embodiments of the present application has the beneficial effects of the positive electrode active material described above, and will not be repeated here.

The following describes the embodiments of the present application in conjunction with specific examples. It should be understood that these examples are only used to illustrate the present application and are not intended to limit the scope of the present application. For the experimental methods in the following examples where specific conditions are not specified, they are usually performed in accordance with the conditions recommended by the manufacturer.

It should be noted that, except for the conditions stated in the examples and comparative examples, the conditions in the examples and comparative examples are consistent.

### Example 1

In this example, the positive electrode active material in the positive electrode plate includes 10% LiMn_{0.6}Fe_{0.4}PO₄ and 90% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³. LiNi_{0.8}Co_{0.1}Mn_{0.1}O₂ has a median particle size of 8 µm.

### Example 2

In this example, the positive electrode active material in the positive electrode plate includes 20% LiMn_{0.6}Fe_{0.4}PO₄ and 80% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³. LiNi_{0.8}Co_{0.1}Mn_{0.1}O₂ has a median particle size of 8 µm.

### Example 3

In this example, the positive electrode active material in the positive electrode plate includes 30% LiMn_{0.6}Fe_{0.4}PO₄ and 70% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³. LiNi_{0.8}Co_{0.1}Mn_{0.1}O₂ has a median particle size of 8 µm.

### Example 4

In this example, the positive electrode active material in the positive electrode plate includes 40% LiMn_{0.6}Fe_{0.4}PO₄ and 60% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³. LiNi_{0.8}Co_{0.1}Mn_{0.1}O₂ has a median particle size of 8 µm.

### Example 5

In this example, the positive electrode active material in the positive electrode plate includes 5% LiMn_{0.5}Fe_{0.5}PO₄ and 95% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.5}Fe_{0.5}PO₄ has a hollow spherical structure with a median particle size of 0.8 µm, a specific surface area of 18 m²/g, and a tap density of 0.6 g/cm³. LiNi_{0.5}Co_{0.2}Mn_{0.3}O₂ has a median particle size of 6 µm.

### Example 6

In this example, the positive electrode active material in the positive electrode plate includes 45% LiMn_{0.5}Fe_{0.5}PO₄ and 55% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.5}Fe_{0.5}PO₄ has a hollow spherical structure with a median particle size of 0.8 µm, a specific surface area of 18 m²/g, and a tap density of 0.6 g/cm³. LiNi_{0.5}Co_{0.2}Mn_{0.3}O₂ has a median particle size of 6 µm.

### Comparative Example 1

In this example, the positive electrode active material in the positive electrode plate is 100% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiNi_{0.8}Co_{0.1}Mn_{0.1}O₂ has a median particle size of 8 µm.

### Comparative Example 2

In this example, the positive electrode active material in the positive electrode plate is 100% LiMn_{0.6}Fe_{0.4}PO₄; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³.

### Comparative Example 3

In this example, the positive electrode active material in the positive electrode plate includes 50% LiMn_{0.6}Fe_{0.4}PO₄ and 50% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³. LiNi_{0.8}Co_{0.1}Mn_{0.1}O₂ has a median particle size of 8 µm.

### Comparative Example 4

In this example, the positive electrode active material in the positive electrode plate includes 70% LiMn_{0.6}Fe_{0.4}PO₄ and 30% LiNi_{0.8}Co_{0.1}Mn_{0.1}O₂; the negative electrode active material in the negative electrode plate is graphite; the electrolyte in the electrolyte solution is LiPF₆; and the separator is a 12 µm PP separator. The positive electrode plate, the negative electrode plate, the electrolyte solution, and the separator were assembled to obtain a 2 Ah lithium-ion battery.

LiMn_{0.6}Fe_{0.4}PO₄ has a hollow spherical structure with a median particle size of 1.5 µm, a specific surface area of 15 m²/g, and a tap density of 0.7 g/cm³. LiNi_{0.8}Co_{0.1}Mn_{0.1}O₂ has a median particle size of 8 µm.

The batteries assembled in Examples 1-6 and Comparative Examples 1-4 were tested for their 0.1C gram capacity, 3C capacity retention rate, and energy density. The results are shown in Table 1.

**Table 1 Comparison table of test results of battery performance in different Examples and Comparative Examples**

| | 0.1C Gram capacity (mAh/g) | 3C Capacity retention rate (%) | Energy density (Wh/kg) |
|---|---|---|---|
| Example 1 | 192 | 62.30 | 262 |
| Example 2 | 186 | 68.45 | 256 |
| Example 3 | 180 | 72.18 | 250 |
| Example 4 | 171 | 76.50 | 243 |
| Example 5 | 191 | 63.52 | 259 |
| Example 6 | 169 | 79.68 | 241 |
| Comparative Example 1 | 197 | 57.82 | 270 |
| Comparative Example 2 | 145 | 92.96 | 200 |
| Comparative Example 3 | 167 | 80.82 | 237 |
| Comparative Example 4 | 158 | 89.10 | 233 |

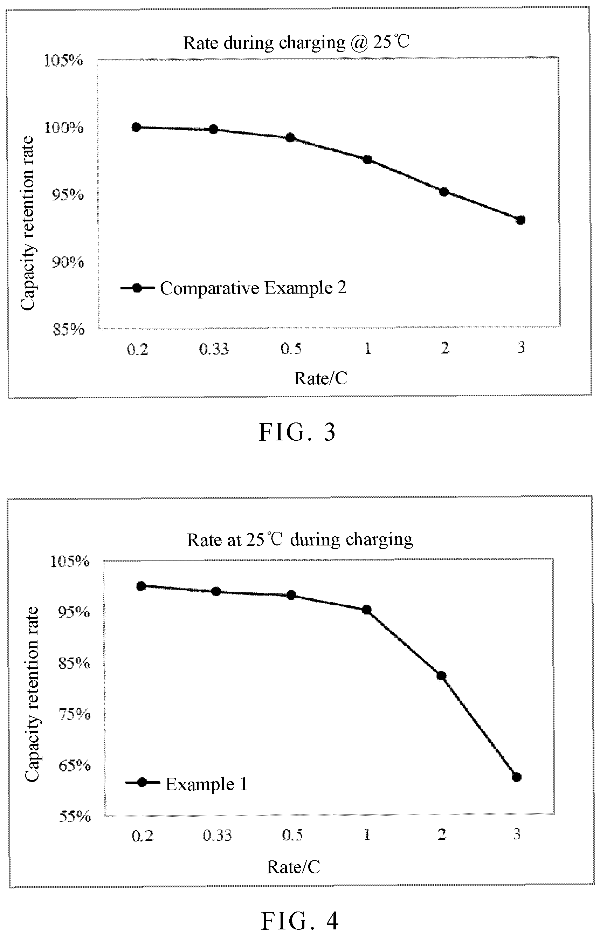

As can be seen from Table 1, in Comparative Example 1, the positive electrode active material uses 100% ternary material with the 3C capacity retention rate of 57.82% (as shown in FIG. 2). In Comparative Example 2, the positive electrode active material uses 100% lithium manganese iron phosphate with the 3C capacity retention rate of 92.96% (as shown in FIG. 3). The battery in Comparative Example 2 exhibits better rate performance than that in Comparative Example 1, mainly because lithium manganese phosphate has a hollow spherical structure and a relatively small particle size. This shortens the extraction path and the insertion path of lithium ions during charging and discharging processes, which is conducive to improving rate performance.

Comparing Examples 1-6 with Comparative Examples 1-4, blending a certain proportion of lithium manganese iron phosphate into the positive electrode active material can improve the rate performance of batteries based solely on ternary materials. Moreover, as the blending proportion of lithium manganese iron phosphate increases, the rate performance of the batteries gradually enhances. When the blending proportion of lithium manganese iron phosphate is 10%, the 3C capacity retention rate of the battery is 62.30% (Example 1, as shown in FIG. 4), which is a 4.5% improvement compared to the battery using 100% ternary material. When the blending proportion of lithium manganese iron phosphate is 20%, the 3C capacity retention rate of the battery is 68.45% (Example 2), representing a 10.6% improvement compared to the battery using 100% ternary material. When the blending amount of lithium manganese iron phosphate is 30%, the 3C capacity retention rate of the battery is 72.18% (Example 3), representing a 14.4% improvement compared to the battery using 100% ternary material. When the blending amount of lithium manganese iron phosphate is 40%, the 3C capacity retention rate of the battery is 76.50% (Example 4), representing a 18.7% improvement compared to the battery using 100% ternary material. When the blending amount of lithium manganese iron phosphate is 5%, the 3C capacity retention rate of the battery is 63.52% (Example 5), showing a 5.7% improvement over the battery using 100% ternary material. When the blending amount of lithium manganese iron phosphate is 45%, the 3C capacity retention rate of the battery is 79.68% (Example 5), showing a 21.9% improvement over the battery using 100% ternary material. When the positive electrode active material is 100% lithium manganese iron phosphate, the 3C capacity retention rate of the battery is 92.96% (Comparative Example 2), representing a 35.1% improvement compared to the battery using 100% ternary material. When the blending amount of lithium manganese iron phosphate is 50%, the 3C capacity retention rate of the battery is 80.82% (Comparative Example 3), showing a 23.0% improvement over the battery using 100% ternary material. When the blending amount of lithium manganese iron phosphate is 70%, the 3C capacity retention rate of the battery is 89.10% (Comparative Example 4), showing a 31.3% improvement over the battery using 100% ternary material.

However, when 100% lithium manganese iron phosphate is used, the actual gram capacity performance is 145 mAh/g (Comparative Example 2), which is 52 mAh/g lower than the actual gram capacity performance of 197 mAh/g achieved with 100% ternary material (Comparative Example 1). As the blending proportion of lithium manganese iron phosphate increases, the actual gram capacity performance of the battery decreases. When the blending amount of lithium manganese iron phosphate is 10%, the 0.1C gram capacity of the battery is 192 mAh/g (Example 1), which is 5 mAh/g lower than the gram capacity of the battery using 100% ternary material. When the blending amount of lithium manganese iron phosphate is 20%, the 0.1C gram capacity of the battery is 186 mAh/g (Example 2), which is 11 mAh/g lower than the gram capacity of the battery using 100% ternary material. When the blending amount of lithium manganese iron phosphate is 30%, the 0.1C gram capacity of the battery is 180 mAh/g (Example 3), which is 17 mAh/g lower than the gram capacity of the battery using 100% ternary material. When the blending amount of lithium manganese iron phosphate is 40%, the 0.1C gram capacity of the battery is 171 mAh/g (Example 4), which is 26 mAh/g lower than the gram capacity of the battery using 100% ternary material. When the blending amount of lithium manganese iron phosphate is 5%, the 0.1C gram capacity of the battery is 191 mAh/g (Example 5), which is 6 mAh/g lower than the gram capacity of the battery using 100% ternary material. When the blending amount of lithium manganese iron phosphate is 45%, the 0.1C gram capacity of the battery is 169 mAh/g (Example 6), which is 28 mAh/g lower than the gram capacity of the battery using 100% ternary material. When the blending proportion of lithium manganese iron phosphate is 50%, the 0.1C gram capacity of the battery is 167 mAh/g (Comparative Example 3), which is 30 mAh/g lower than the gram capacity of the battery using 100% ternary material. When the blending proportion of lithium manganese iron phosphate is 70%, the 0.1C gram capacity of the battery is 158 mAh/g (Comparative Example 4), which is 39 mAh/g lower than the gram capacity of the battery using 100% ternary material.

Additionally, blending a certain proportion of lithium manganese iron phosphate into the positive electrode active material can improve the energy density of the battery compared to using lithium manganese iron phosphate alone. Moreover, as the blending proportion of ternary material increases, the energy density gradually increases. When the blending proportion of lithium manganese iron phosphate is 10% and the blending proportion of the ternary material is 90%, the energy density of the battery is 262 Wh/kg (Example 1), which is 62 Wh/kg higher than the energy density of the battery using lithium manganese iron phosphate alone. When the blending proportion of lithium manganese iron phosphate is 20% and the blending ratio of the ternary material is 80%, the energy density of the battery is 256 Wh/kg (Example 2), which is 56 Wh/kg higher than the energy density of the battery using lithium manganese iron phosphate alone. When the blending proportion of lithium manganese iron phosphate is 30% and the blending ratio of the ternary material is 70%, the energy density of the battery is 250 Wh/kg (Example 3), which is 50 Wh/kg higher than the energy density of the battery using lithium manganese iron phosphate alone. When the blending proportion of lithium manganese iron phosphate is 40% and the blending ratio of the ternary material is 60%, the energy density of the battery is 243 Wh/kg (Example 4), which is 43 Wh/kg higher than the energy density of the battery using lithium manganese iron phosphate alone. When the blending proportion of lithium manganese iron phosphate is 5% and the blending ratio of the ternary material is 95%, the energy density of the battery is 259 Wh/kg (Example 5), which is 59 Wh/kg higher than the energy density of the battery using lithium manganese iron phosphate alone. When the blending proportion of lithium manganese iron phosphate is 45% and the blending ratio of the ternary material is 55%, the energy density of the battery is 241 Wh/kg (Example 6), which is 41 Wh/kg higher than the energy density of the battery using lithium manganese iron phosphate alone. When the blending proportion of lithium manganese iron phosphate is 50% and the blending ratio of the ternary material is 50%, the energy density of the battery is 237 Wh/kg (Comparative Example 3), which is 37 Wh/kg higher than the energy density of the battery using lithium manganese iron phosphate alone. When the blending proportion of lithium manganese iron phosphate is 70% and the blending ratio of the ternary material is 30%, the energy density of the battery is 233 Wh/kg (Comparative Example 4), which is 33 Wh/kg higher than the energy density of the battery using lithium manganese iron phosphate alone.

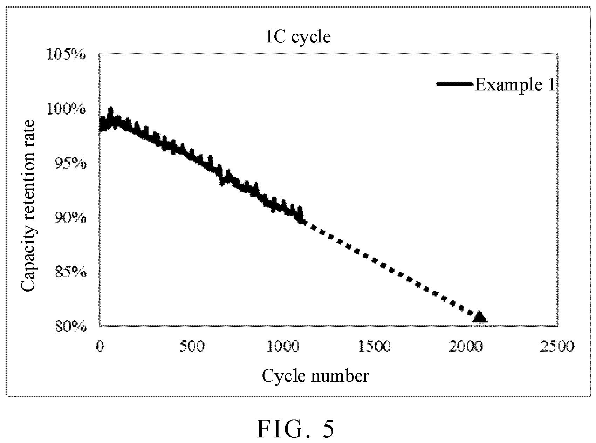

In addition, lithium manganese iron phosphate has an olivine structure and exhibits excellent cycling performance. In Example 1, by blending 10% lithium manganese iron phosphate into the positive electrode active material, the battery can achieve over 2,000 cycles (as shown in FIG. 5).

In summary, in the present application, by incorporating both the ternary material and hollow spherical lithium manganese iron phosphate into the positive electrode active material-specifically, by blending hollow spherical lithium manganese iron phosphate into the ternary material and controlling the blending proportion of lithium manganese iron phosphate in the positive electrode active material within the range of greater than 0% and less than 50%-cost savings can be achieved. Meanwhile, this approach can balance rate performance, cycling performance, and energy density, ensuring the overall electrochemical performance.

## Claims

1. A positive electrode active material, comprising a ternary material and lithium manganese iron phosphate,
wherein a mass of the lithium manganese iron phosphate is represented by A, and a total mass of the ternary material and the lithium manganese iron phosphate is represented by B, wherein A and B satisfy: 0 < A/B < 50%; and
wherein the lithium manganese iron phosphate has a hollow spherical structure, and the lithium manganese iron phosphate has a median particle size ranging from 0.5 µm to 3 µm.

2. The positive electrode active material of claim 1, wherein the lithium manganese iron phosphate has a specific surface area ranging from 11 m²/g to 21m²/g.

3. The positive electrode active material of claim 1 or 2, wherein the lithium manganese iron phosphate has a tap density ranging from 0.3 g/cm³ to 0.8 g/cm³.

4. The positive electrode active material of any one of claims 1 to 3, wherein a molecular formula of the ternary material is represented by LiNiₐCo_{b}Mn_{c}M_{d}O₂, wherein a + b + c + d = 1, a ≥ 0.5, b ≤ 0.3, and 0 ≤ d ≤ 0.05; and
wherein M is selected from a group consisting of Zr, Sr, W, B, Nb, Al, Mg, and Ti.

5. The positive electrode active material of any one of claims 1 to 4, wherein the ternary material has a median particle size ranging from 3 µm to 10 µm.

6. The positive electrode active material of any one of claims 1 to 5, wherein the lithium manganese iron phosphate comprises a lithium manganese iron phosphate body and a carbon coating layer covering the lithium manganese iron phosphate body.

7. A method for preparing a positive electrode active material, used for preparing the positive electrode active material as claimed in any one of claims 1 to 6, comprising steps of:
providing a ternary material and lithium manganese iron phosphate; and
mixing the ternary material and the lithium manganese iron phosphate in a certain ratio to obtain a positive electrode active material.

8. The method for preparing the positive electrode active material of claim 7, wherein before providing the ternary material and the lithium manganese iron phosphate, the method further comprises a step of:
preparing the lithium manganese iron phosphate,
wherein the preparing the lithium manganese iron phosphate comprises steps of:
adding a phosphoric acid solution to a lithium source solution for a reaction to obtain a hollow spherical lithium phosphate precursor;
dispersing a ferrous salt, a manganese salt, and a lithium phosphate precursor in a solvent to form a lithium manganese iron phosphate precursor after a reaction; and
performing a first sintering on the lithium manganese iron phosphate precursor to obtain the lithium manganese iron phosphate.

9. The method for preparing the positive electrode active material of claim 8, wherein the adding the phosphoric acid solution to the lithium source solution for a reaction to obtain the hollow spherical lithium phosphate precursor comprises steps of:
adding the phosphoric acid solution to a lithium hydroxide solution, obtaining a first filtrate through stirring at room temperature for 2 hours to 4 hours, and filtering; and
drying the first filtrate to obtain the hollow spherical lithium phosphate precursor.

10. The method for preparing the positive electrode active material of claim 8 or 9, wherein a ratio of an amount of substance of the ferrous salt to an amount of substance of the manganese salt is 1: 9 to 9: 1.

11. The method for preparing the positive electrode active material of any one of claims 8 to 10, wherein a ratio of a sum of an amount of substance of the ferrous salt and an amount of substance of the manganese salt to an amount of substance of the lithium phosphate precursor is 1: 1.

12. The method for preparing the positive electrode active material of any one of claims 8 to 11, wherein the performing the first sintering on the lithium manganese iron phosphate precursor comprises a step of:
sintering the lithium manganese iron phosphate precursor under a protective atmosphere at a temperature of 150°C to 200°C for 5 hours to 8 hours.

13. The method for preparing the positive electrode active material of any one of claims 8 to 12, wherein after the sintering the lithium manganese iron phosphate precursor, the method further comprises steps of:
mixing the sintered lithium manganese iron phosphate precursor with a carbon source and a first additive to obtain a coating material; and
performing a second sintering on the coating material to obtain the lithium manganese iron phosphate comprising a carbon coating layer.

14. The method for preparing the positive electrode active material of claim 13, wherein a mass proportion of the carbon source in the coating material ranges from 10% to 20%.

15. The method for preparing the positive electrode active material of claim 13 or 14, wherein the first additive comprises at least one of Mg, Ti, Nb, Nd, Zr, and Al, and an addition proportion of the first additive in the coating material ranges from 0 ppm to 6,000 ppm.

16. The method for preparing the positive electrode active material of any one of claims 13 to 15, wherein performing the second sintering on the coating material comprises a step of:
sintering the coating material at a temperature of 550°C to 750°C for 5 hours to 8 hours.

17. The method for preparing the positive electrode active material of any one of claims 7 to 16, wherein before providing the ternary material and the lithium manganese iron phosphate, the method further comprises a step of:
preparing the ternary material,
wherein the preparing the ternary material comprises steps of:
mixing a ternary material precursor, lithium carbonate, and a second additive to obtain a first mixture;
performing a third sintering on the first mixture under an oxygen-containing atmosphere to obtain a first sintered material; and
crushing the first sintered material to obtain the ternary material.

18. The method for preparing the positive electrode active material of claim 17, wherein the performing the third sintering on the first mixture under the oxygen-containing atmosphere comprises a step of:
placing the first mixture in a sintering furnace for sintering under an atmosphere having an oxygen concentration of ≥ 95%,
wherein during a sintering process, the sintering furnace is first heated from room temperature to a temperature of 450°C to 600°C at a heating rate of 5 °C/min, held for 3 hours to 5 hours, then heated to a temperature of 700°C to 900°C at a heating rate of 5°C/min, and held for 6 hours to 10 hours.

19. A positive electrode plate, comprising a positive electrode foil and a positive electrode active layer coated on the positive electrode foil,
wherein the positive electrode active layer comprises the positive electrode active material as claimed in any one of claims 1 to 6;
and/or, a positive electrode active material prepared by the method for preparing the positive electrode active material as claimed in any one of claims 7 to 18.

20. A battery, comprising the positive electrode plate as claimed in claim 19.
